# EUROPÄISCHE PATENTANMELDUNG

(11) **EP 1 555 247 A1**
(43) Veröffentlichungstag der Anmeldung: **20.07.2005**
(21) Anmeldenummer: 04000836.9
(22) Anmeldetag: 16.01.2004
(51) Int. Cl.: C03C 3/17

(54) **Optisches Glas insbesondere für blankgepresste optische Elemente**

(71) Anmelder: Schott AG, 55122 Mainz (DE)
(72) Erfinder: Ritter, Simone Monika, Dr., 55116 Mainz (DE); Wölfel, Ute, 55130 Mainz-Laubenheim (DE); Wolff, Silke, Dr., 42499 Hückeswagen (DE)

(57) **Zusammenfassung**

Die vorliegende Erfindung beschreibt blei- und vorzugsweise auch lithium-, arsen- und fluorfreie optische Gläser für die Applikationsbereiche Abbildung, Projektion, Telekommunikation, optische Nachrichtentechnik und/oder Lasertechnologie mit einem Brechwert von 1,50 ≤ n_{d} ≤ 1,57, einer Abbé-Zahl von 61 ≤ ν_{d} ≤ 70 und einer geringen Transformationstemperatur Tg vom um oder vorzugsweise unter 400°C, sowie guter Produzier- und Verarbeitbarkeit und Kristallisationsstabilität. Die erfindungsgemäßen Gläser innerhalb des folgenden Zusammensetzungsbereiches (in Gew.-% auf Oxidbasis) erfüllen diese Forderung:

| | | | |
|---|---|---|---|
| P₂O₅ | 40 | - | 60 |
| Al₂O₃ | 1 | - | 20 |
| B₂O₃ | 0 | - | < 5 |
| Na₂O | 0 | - | 30 |
| K₂O | 0 | - | 30 |
| Li₂O | 0 | - | < 1 |
| Σ M₂O | > 15 | - | 40 |
| BaO | 1 | - | 20 |
| ZnO | 1 | - | 20 |
| SrO | 0 | - | 5 |
| CaO | 0 | - | 5 |
| MgO | 0 | - | 5 |
| Σ MO | 5 | - | 25 |

Zusätzlich können sie auch übliche Läutermittel beinhalten.

## Beschreibung

Die vorliegende Erfindung betrifft ein bleifreies und lithiumfreies optisches Phosphatglas, die Verwendung eines solchen Glases für die Bereiche Abbildung, Projektion, Telekommunikation, Optische Nachrichtentechnik und Lasertechnologie, sowie optische Elemente bzw. Preformen solcher optischen Elemente.

In den letzten Jahren geht der Markttrend bei sowohl optischen als auch optoelektronischen Technologien (Applikationsbereiche Abbildung, Projektion, Telekommunikation, optische Nachrichtentechnik und Lasertechnologie) verstärkt in Richtung Miniaturisierung. Dies ist an den immer kleiner werdenden Endprodukten erkennbar und erfordert natürlich eine zunehmende Miniaturisierung der einzelnen Bauteile und Komponenten solcher Endprodukte. Für die Produzenten optischer Gläser ist diese Entwicklung trotz steigender Stückzahlen der Endprodukte mit einem deutlichen Absinken der nachgefragten Volumina an Rohglas verbunden. Gleichzeitig ergibt sich ein zunehmender Preisdruck von Seiten der Nachverarbeiter auf die Glashersteller, da bei der Herstellung solcher kleineren Komponenten aus Block- und/oder Barrenglas prozentual auf das Produkt bezogen deutlich mehr Ausschuss anfällt und die Bearbeitung solcher Kleinstteile einen höheren Aufwand als bei größeren Bauteilen erfordert.

Anstelle des bisher üblichen Heraustrennens von Glasportionen für optische Komponente aus Block- oder Barrenglas, gewinnen daher in jüngerer Zeit Herstellungsverfahren an Bedeutung, bei welchen direkt im Anschluss an die Glasschmelze möglichst endkonturnahe bzw. endgeometrienahe Preforms bzw. Vorformlinge wie z. B. Gobs oder Kugeln erhalten werden können. Beispielsweise steigen die Anfragen der Nachverarbeiter nach endgeometrienahen Vorformen für das Wiederverpressen, sogenannte "Precision Gobs". Unter "Precision Gobs" werden in der Regel vorzugsweise vollständig feuerpolierte, halbfrei- oder freigeformte Glasportionen verstanden, welche bereits portioniert sind und eine der Endform der optischen Komponente nahe Geometrie aufweisen.

Solche Precision Gobs können vorteilhafterweise auch durch das sogenannte (Präzisions-)Blankpressen (Engl. "precise pressing" oder "precise molding") in optische Elemente wie Linsen, Asphären usw. umgewandelt werden. Eine weitere Bearbeitung der geometrischen Form oder der Oberfläche durch z. B. eine Oberflächenpolitur ist dann nicht mehr erforderlich. Durch dieses Verfahren kann den kleineren Glasschmelzvolumina (verteilt auf eine große Stückzahl kleiner Materialstücke) durch geringe Rüstzeiten flexibel entgegengekommen werden. Aufgrund der vergleichsweise geringeren Takt- bzw. Stückzahl und bei den in der Regel kleinen Geometrien kann die Wertschöpfung des Verfahrens jedoch nicht aus dem Materialwert alleine stammen. Die Produkte müssen die Presse daher in einem Zustand verlassen, der "fertig zum System-Einbau" ist, d.h. man muss auf eine aufwendige Nachrichtung, Kühlung und/oder Kaltnachverarbeitung verzichten können. Für ein solches Pressverfahren müssen aufgrund der hohen geforderten Geometriegenauigkeiten Präzisionsgeräte mit hochwertigen und somit teuren Formenmaterialien herangezogen werden. In die Rentabilität der hergestellten Produkte und/oder Materialien gehen dabei die Standzeiten solcher Formen massiv ein. Ein äußerst wichtiger Faktor für eine hohe Standzeit der Formen ist eine möglichst geringe Betriebstemperatur, welche jedoch nur soweit gesenkt werden kann, dass die Viskosität der zu verpressenden Materialien für den Pressvorgang noch ausreichend ist. Es ergibt sich also eine direkte Kausalitätskette zwischen der Verarbeitungstemperatur und damit der Transformationstemperatur Tg eines zu verarbeitenden Glases und der Rentabilität eines solchen Pressvorgangs: Je geringer die Transformationstemperatur des Glases ist, um so höher sind die Standzeiten der Formen und um so größer ist die Gewinnspanne. Aus diesem Zusammenhang ergibt sich das Erfordernis nach sogenannten "Low-Tg-Gläsern", also Gläsern mit geringen Schmelz- und Transformationspunkten, d.h. Gläsern, die bei möglichst geringen Temperaturen eine zur Verarbeitung ausreichende Viskosität aufweisen.

Als weiterer Wunsch aus Sicht der Verfahrenstechnik der Schmelze wird neuerdings verstärkt der Bedarf nach "kurzen" Gläsern gemeldet, also nach Gläsern, deren Viskosität stark mit einer relativ geringen Änderung der Temperatur in einem bestimmten Viskositätsbereich variiert. Dieses Verhalten hat im Schmelzprozess den Vorteil, dass die Heißformgebungszeiten, d.h. die Formschlusszeiten gesenkt werden können. Dadurch wird zum einen der Durchsatz erhöht, d.h. die Taktzeit reduziert. Zum anderen wird auch hierdurch das Formenmaterial geschont, was sich, wie vorstehend beschrieben, ebenfalls positiv auf die Gesamtproduktionskosten niederschlägt. Solche "kurzen" Gläser weisen den weiteren Vorteil auf, dass durch die schnellere Auskühlung als bei entsprechend längeren Gläsern auch Gläser mit stärkerer Kristallisationsneigung verarbeitet werden können. Eine Vorkeimung, welche in nachfolgenden Sekundärheißformgebungsschritten problematisch sein könnte, wird dadurch vermieden. Dies eröffnet die Möglichkeit, solche Gläser auch zu Fasern verziehen zu können.

Ferner ist es auch wünschenswert, dass die Gläser neben den genannten und den erforderlichen optischen Eigenschaften aus möglichst kostengünstigen Komponenten herstellbar sind und ausreichend chemisch resistent sind.

Im Stand der Technik werden zwar bereits Gläser mit ähnlicher optischer Lage oder vergleichbarer chemischer Zusammensetzung beschrieben, jedoch weisen diese Gläser erhebliche Nachteile auf. Insbesondere enthalten viele der Gläser größere Anteile der relativ teuren Komponente Li₂O und/oder die Kristallisationsneigung erhöhende Komponenten, wie TiO₂.

EP 1 275 622 betrifft ein Glas für Presslinge mit einem niedrigen Erweichungspunkt. Letztere Eigenschaft wird durch eine sehr hohe Alkalizugabe und relativ wenig P₂O₅ erreicht. Das Glas enthält zwingend Li₂O in einem Anteil von mindestens 6 Gew.-%.

JP 09-301735 beschreibt ein optisches Glas mit ebenfalls niedrigen Erweichungspunkt. Auch hier wird diese Eigenschaft durch eine sehr hohe Zugabe an Alkalien und relativ wenig P₂O₅ erreicht. Das Glas enthält zwingend Li₂O und TiO₂ in einem jeweils erheblichen Anteil.

JP 2002-173336 umfasst ein optisches hoch brechendes Glas für die präzise Presstechnologie. Das Glas enthält zwingend Li₂O in einem Anteil von mindestens 2 Gew.-%, sowie ferner die ebenfalls teuren Komponenten WO₃, Nb₂O₅ und/oder TiO₂.

US 5,053,360 und US 4,875,920 beschreiben ionenaustauschbare Gläser, welche stets Li₂O in einem Anteil von mindestens 5 Gew.-% enthalten.

JP 61-036137 beschreibt ein niedrig schmelzendes Glas, wobei in den Beispielen ausschließlich Gläser genannt sind, welche mindestens 4 Gew.-% Li₂O enthalten.

JP 09-278479 beschreibt ein niedrig schmelzendes Glas, das mindestens 1 Gew.-% Li₂O enthält. Außerdem sind Y₂O₃, La₂O₃ und/oder Gd₂O₃ zwingend enthalten. Auch diese sind teure Komponenten.

US 6,409,396 beschreibt ein Glassubstrat, das beschichtet mit Interferenzschichten ein Interferenzfilter ergibt. Das einzige Beispiel nennt ein Glas, welches nicht bleifrei ist und ferner weder BaO noch ZnO enthält.

JP 11-349347 beschreibt eine kristalline Glaszusammensetzung mit niedrigem Schmelzpunkt. Es enthält mindestens 0,1 Mol-% SnO₂, das u.a. als Trübungsmittel im Glas fungiert. SnO₂ schmilzt nur bei sehr hohen Temperaturen in größeren Mengen in Oxidgläsern auf und erschwert deshalb den Schmelzprozess.

WO 94/08373, JP 63-021240 und DE 33 40 968 betreffen Lasergläser mit einem zwingenden Anteil an laseraktiven Komponenten wie Lanthanoide und sind daher als optische Gläser nicht geeignet.

DE 27 53 219 beschreibt ein nichtbeschlagendes Glas, das stets SiO₂ und/oder B₂O₃ in einem Anteil von 6 bis 15 Mol-% enthält. Beide Komponenten erhöhen die obere Entglasungsgrenze (OEG), d.h. dem Temperaturbereich, oberhalb dem sich im Glas keine Kristalle bilden können bzw. sich vorhandene Kristalle wieder auflösen.

DE 1 596 854 betrifft ein optisches Glas mit weitgehend temperaturunabhängiger optischer Weglänge. Die Beispiele nennen ausschließlich Gläser mit einer Summe M₂O von weniger als 15 Gew.-%.

DE 1 089 934 umschreibt ein optisches Kronglas mit niedriger Dispersion. Eine Brechwertlage von 1,50 bis 1,57 bei einer Dispersion zwischen 61 und 70 wird jedoch nicht erreicht.

US 2,381,925 beschreibt ein technisches Glas mit hoher chemischer Resistenz, das einen P₂O₅ -Anteil von mindestens 60 Gew.-% aufweist. Ein so hoher Anteil P₂O₅ kann nicht mehr als komplexes Phosphat dem Gemenge zugegeben werden, sondern muss als freies P₂O₅ zugegeben werden, woraus sich Nachteile im Schmelzverhalten bei der Verdampfung und Verstaubung ergeben und ein Glas mit einer schlechteren inneren Qualität erhalten wird.

Gleiches gilt für die in JP 03-218941 beschriebenen Gläser für einen Polarisator in Hochenergielasersystemen mit einen Anteil von mindestens 60 Gew.-% P₂O₅. Auch das in US 5,824,615 beschriebene optische Glas für die Precise Pressing Technologie enthält mindestens 73,9 Gew.-% P₂O₅ und ferner Li₂O in einem Anteil von mindestes 1,1 Gew.-%.

DE 1 496 064 beschreibt ein optisches Glas. Es enthält mindestens 1 Gew.-% B₂O₃ und/oder TiO₂, welche die vorstehend genannten Nachteile aufweisen.

DD 29 825 beschreibt ein Glas mit niedrigem Brechungsindex und hoher Dispersion. Es enthält zwingend F und TiO₂ in größeren Mengen u.a. zur Einstellung der optischen Lage, insbesondere einer Abbezahl von kleiner 40. F ist eine Komponente, die aufgrund der leichten Verdampfung, den Herstellungsprozess erschweren kann.

EP 0 481 166 betrifft ein optisches Glas, das einen relativ hohen Anteil ZnO von 34 Mol% enthält. Ein so hoher Anteil ZnO erhöht die Trübungsneigung des Glases.

JP 02-124743 betrifft ein optisches Glas für die Precise Pressing Technologie, bei welchem jedoch die Summe an Komponenten MO wesentlich unter 28 Gew.-% liegt.

JP 08-183632 beschreibt ein niedrigschmelzendes Glas mit einem Phosphatanteil von höchstens 35 Mol-%. Es enthält ferner mindestens 8 Mol-% B₂O₃. Beim Schmelzen können Probleme insofern auftreten, als sich ein beträchtlicher Anteil an B₂O₃ verflüchtigen kann. Außerdem macht B₂O₃ das Glas bzgl. der Viskositätseigenschaft "lang" und erhöht die OEG.

Somit bestand die Aufgabe der vorliegenden Erfindung darin, ein optisches Glas bereitzustellen, mit welchem auch (aufgrund ökologischer Erwägungen) ohne eine Verwendung von PbO und möglichst auch ohne As₂O₃, B₂O₃, Li₂O und F, die gewünschten optischen Eigenschaften (n_{d}/ν_{d}) bei gleichzeitig sehr geringen Transformationstemperaturen ermöglicht werden. Diese Gläser sollen über das Blankpressverfahren verarbeitbar sein und für die Applikationsbereiche Abbildung, Projektion, Telekommunikation, optische Nachrichtentechnik und/oder Lasertechnologie geeignet sein, einen Brechwert n_{d} von 1,50 ≤ n_{d} ≤ 1,57, eine Abbé-Zahl ν_{d} von 61 ≤ ν_{d} ≤ 70 und vorzugsweise eine möglichst geringe Transformationstemperatur Tg ≤ 400°C aufweisen. Ferner sollen sie gut zu schmelzen und zu verarbeiten sein, sowie eine ausreichende Kristallisationsstabilität besitzen, die eine Fertigung in kontinuierlich geführten Aggregaten möglich machen. Wünschenswert ist ferner ein möglichst kurzes Glas in einem Viskositätsbereich von 10^{7,6} bis 10¹³dPas.

Die vorstehende Aufgabe wird durch die in den Ansprüchen beschriebenen Ausführungsformen der vorliegenden Erfindung gelöst.

Insbesondere wird ein blei- und vorzugsweise arsen- und fluorfreies optisches Glas mit einem Brechwert n_{d} von 1,50 ≤ n_{d} ≤ 1,57 und einer Abbé-Zahl ν_{d} von 61 ≤ ν_{d} ≤ 70 bereitgestellt, welches die folgende Zusammensetzung umfasst (in Gew.-% auf Oxidbasis):

| | |
|---|---|
| P₂O₅ | 40 - 60 |
| Al₂O₃ | 1 - 20 |
| B₂O₃ | 0 - < 5 |
| Na₂O | 0 - 30 |
| K₂O | 0 - 30 |
| Li₂O | 0 - < 1 |
| Σ M₂O | > 15 - 40 |
| BaO | 1 - 20 |
| ZnO | 1 - 20 |
| SrO | 0 - 5 |
| CaO | 0 - 5 |
| MgO | 0 - 5 |
| Σ MO | 5 - 25 |

Die erfindungsgemäßen Gläser haben mit bekannten optischen Gläsern ähnlicher Glasfamilien die optische Lage, wie die Abbé-Zahl und den Brechwert, gemeinsam. Sie zeichnen sich jedoch durch eine gute Schmelz- und Verarbeitbarkeit, geringe Produktionskosten durch reduzierte Verarbeitungs- und Rohstoffkosten, sowie durch eine gute Umweltverträglichkeit aus.

Insbesondere sind diese Gläser zum endkonturennahen Verarbeiten, wie z. B. der Herstellung von Precision Gobs, sowie einen Blankpressvorgang zum Herstellen einer optischen Komponente mit exakter Endkontur geeignet. In diesem Zusammenhang wurde das Viskositätstemperaturprofil und Verarbeitungstemperatur der erfindungsgemäßen Gläser vorzugsweise so eingestellt, dass eine solche endgeometrienahe bzw. endkonturgebenden Heißformgebung auch mit empfindlichen Präzisionsmaschinen möglich ist.

Zudem ermöglicht die Kombination von Kristallisationsstabilität und Viskositätstemperaturprofil der erfindungsgemäßen Gläser eine nahezu problemlose thermische (Weiter-)Behandlung (Pressen, bzw. Wiederverpressen) der Gläser oder Preformen aus diesen Gläsern.

Insbesondere weisen die erfindungsgemäßen Gläser einen Brechwert n_{d} von 1,50 ≤ n_{d} ≤ 1,57, vorzugsweise 1,51 ≤ n_{d} ≤ 1,56, besonders bevorzugt 1,51 ≤ n_{d} ≤ 1,54 eine Abbé-Zahl von 61 ≤ ν_{d} ≤ 70, vorzugsweise 61 ≤ ν_{d} ≤ 67, besonders bevorzugt 62 ≤ ν_{d} ≤ 66 auf.

Gemäß einer Ausführungsform der vorliegenden Erfindung weisen die erfindungsgemäßen Gläser eine Transformationstemperatur Tg ≤ 400°C, vorzugsweise Tg ≤ 380°C auf. Erfindungsgemäß wird unter einem "Low-Tg-Glas" ein Glas mit einer niedrigen Transformationstemperatur Tg, d.h. vorzugsweise einem Tg von höchstens 400°C verstanden.

Vorzugsweise sind die erfindungsgemäßen Gläser möglichst kurz, insbesondere in einem Viskositätsbereich von vorzugsweise 10^{7,6} bis 10¹³ dPas. Unter "kurzen Gläsern" werden dabei Gläser verstanden, deren Viskosität stark mit einer relativ geringen Änderung der Temperatur in einem bestimmten Viskositätsbereich variiert. Vorzugsweise beträgt das Temperaturintervall ΔT, in welchem die Viskosität dieses Glases von 10^{7,6} bis 10¹³ dPas absinkt, höchstens 100 K, mehr bevorzugt höchstens 80 K und am meisten bevorzugt höchstens 70 K.

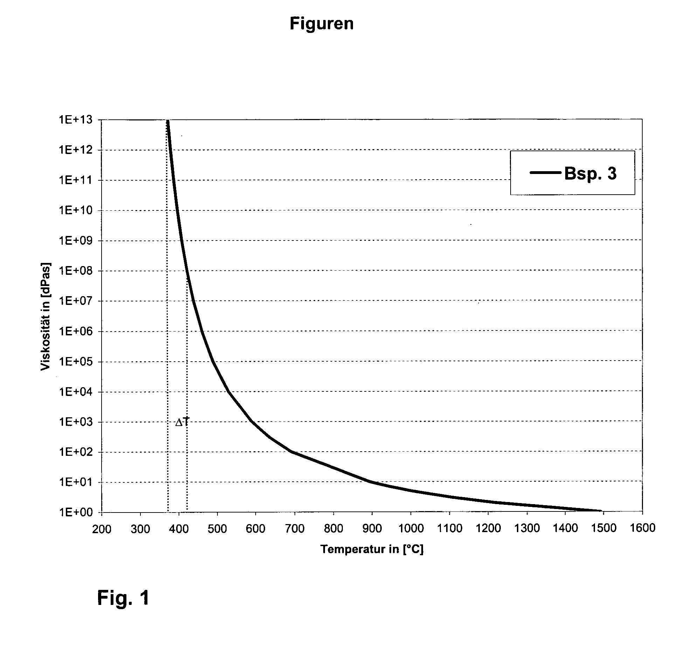

Figur 1 zeigt die Viskositätskurve eines erfindungsgemäßen Glases gemäß Beispiel 3. In Figur 1 zeigen die gepunkteten senkrechten Linen das Temperaturintervall ΔT, in welchem die Viskosität dieses Glases von 10^{7,6} bis 10¹³ dPas absinkt. ΔT liegt hier zwischen 427 und 372°C, d.h. beträgt nur 55 K.

Unter der "inneren Qualität" eines Glases wird erfindungsgemäß verstanden, dass das Glas einen möglichst geringen Anteil an Blasen und/oder Schlieren und/oder ähnlichen Fehlern enthält, bzw. vorzugsweise frei von diesen ist.

Im folgenden bedeutet der Ausdruck "X-frei" bzw. "frei von einer Komponente X", dass das Glas diese Komponente X im wesentlichen nicht enthält, d.h. dass eine solche Komponente höchstens als Verunreinigung in dem Glas vorliegt, jedoch der Glaszusammensetzung nicht als einzelne Komponente zugegeben wird. X steht dabei für eine beliebige Komponente, wie beispielsweise Li₂O.

Im folgenden sind alle Anteilsangaben der Glaskomponenten in Gew.-% und auf Oxidbasis angegeben, wenn es nicht anders beschrieben ist.

Das Grundglassystem des erfindungsgemäßen Glases ist das Alkali-Phosphat-System, welches intrinsisch eine gute Basis für die angestrebten Eigenschaften besitzt.

Das erfindungsgemäße Glas weist einen P₂O₅- bzw. Phosphatanteil von mindestens 40 Gew.-%, bevorzugt mindestens 43 Gew.-%, besonders bevorzugt mindestens 45 Gew.-%, auf und ist daher ein gutschmelzendes Low-Tg-Glas. Eine Reduzierung des Phosphatgehaltes unter 40 Gew.-% würde zu Gläsern führen, die nicht mehr das Prädikat "Low-Tg-Glas" für sich beanspruchen könnten. Der Phosphatanteil, beträgt höchstens 60 Gew.-%, bevorzugt höchstens 59 Gew.-%, besonders bevorzugt höchstens 55 Gew.-%, am meisten bevorzugt höchstens 52 Gew.-%. Eine weitere Erhöhung über 60 Gew.-% hinaus würde den Brechwert zu sehr verringern.

Das erfindungsgemäße Glas weißt einen Al₂O₃-Anteil von mindestens 1 Gew.-%, vorzugsweise mindestens 5 Gew.-%, besonders bevorzugt mindestens 8 Gew.-% auf. Der Anteil von Al₂O₃ ist auf höchstens 20 Gew.-%, bevorzugt höchstens 15 Gew.-%, besonders bevorzugt höchstens 14 Gew.-% beschränkt. Die angegebene Obergrenze von 20 Gew.-% sollte nicht überschritten werden, da sonst die Kürze des Glases im Viskositätsbereich von 10^{7,6} bis 10¹³ dPas aufgrund der netzwerkbildenden Eigenschaften des Al₂O₃ verloren geht. Ein Mindestanteil von 1 Gew.-% Al₂O₃ sollte hingegen nicht unterschritten werden, da sich sonst die chemische Resistenz (Säureresistenz) des Glases stark verschlechtern könnte.

Vorzugsweise beträgt die Summe Σ P₂O₅ + Al₂O₃ mindestens 54 Gew.-%, mehr bevorzugt mindestens 58 Gew.-%. Bei einem geringern Anteil kann das Glas zur Kristallisation neigen. Sofern die genannte Summe nahe 58 Gew.-% liegt oder sogar leicht darunter, sollte der Anteil an Erdalkalioxiden möglichst gering sein, vorzugsweise sollte das Glas frei von Erdalkalioxiden sein.

Summe an Alkalimetalloxiden M₂O im erfindungsgemäßen Glas beträgt von mehr als 15 bis 40 Gew.-%. Bevorzugt sind höchstens 35 Gew.-%, besonders bevorzugt höchstens 30 Gew.-%, am meisten bevorzugt höchstens 28 Gew.-%, Alkalimetalloxide M₂O enthalten. Die Summe M₂O von 40 Gew.-% sollte nicht überschritten werden, da sich ansonsten die chemische Beständigkeit des Glases verschlechtern kann und sich der Ausdehnungskoeffizient zu stark erhöhen kann. Die Zugabe der Alkalimetalloxide, insbesondere Na₂O und K₂O, dient der Optimierung des Aufschmelzverhaltens, d.h. sie wirken als Flussmittel. Außerdem tragen sie zur Absenkung des Tg bei, und eine Zugabe von insbesondere Na₂O ist erfindungsgemäß bevorzugt. Anteile Na₂O oder K₂O von jeweils mehr als 30 Gew.-% oder in Summe M₂O von mehr als 40 Gew.-% verschlechtern die chemische Resistenz des Glases und erhöhen den thermischen Ausdehnungskoeffizienten stark, was für eine Verarbeitung des Glases in einem Pressprozess von Nachteil ist. Das Glas enthält mehr als 15 Gew.-%, vorzugsweise mindestens 16 Gew.-% und besonders bevorzugt mindestens 20 Gew.-% M₂O.

Vorzugsweise werden dem erfindungsgemäßen Glas ausschließlich Na₂O und/oder K₂O als Alkalimetalloxide M₂O zugesetzt. Li₂O ist als teure Komponente nicht bevorzugt. Das erfindungsgemäße Glas enthält daher weniger als 1 Gew.-% Li₂O und ist gemäß bevorzugter Ausführungsformen Li₂O-frei.

Das erfindungsgemäße Glas enthält Na₂O in einem Anteil von vorzugsweise mindestens 1 Gew.-%, noch bevorzugter mindestens 3 Gew.-%, am meisten bevorzugt mindestens 5 Gew.-%. Na₂O ist in einem Anteil von höchstens 30 Gew.-%, vorzugsweise höchstens 20 Gew.-%, am meisten bevorzugt höchstens 15 Gew.-%, im erfindungsgemäßen Glas enthalten.

K₂O kann in einem Anteil von vorzugsweise mindestens 1 Gew.-%, mehr bevorzugt mindestens 3 Gew.-% und am meisten bevorzugt von mindestens 5 Gew.-% im erfindungsgemäßen Glas enthalten sein. Der K₂O-Anteil beträgt höchstens 30 Gew.-% und sollte vorzugsweise 20 Gew.-%, am meisten bevorzugt 15 Gew.-%, nicht überschreiten.

Vorzugsweise enthält das Glas ein Gemisch aus Na₂O und K₂O.

Ferner enthält das erfindungsgemäße Glas eine oder mehrere Komponenten MO, welche aus der Gruppe bestehend aus BaO, ZnO und optional auch Erdalkalimetalloxiden ausgewählt ist/sind. Diese Summe MO beträgt höchstens 25 Gew.-%, vorzugsweise höchstens 22 Gew.-% und am meisten bevorzugt höchstens 21 Gew.-%.

Zur flexiblen Regulierung des Viskositätstemperaturverhaltens und der Bindung von Phosphatäquivalenten werden dem erfindungsgemäßen Glas mindestens 1 Gew.-%, bevorzugt mindestens 4 Gew.-%, besonders bevorzugt mindestens 5 Gew.-%, BaO zugesetzt. Der Anteil an BaO im erfindungsgemäßen Glas beträgt höchstens 20 Gew.-%, bevorzugt höchstens 15 Gew.-%, besonders bevorzugt höchstens 11 Gew.-% und am meisten bevorzugt höchstens 10 Gew.-%.

Das erfindungsgemäße Glas enthält mindestens 1 Gew.-%, bevorzugt höchstens 2 Gew.-%, besonders bevorzugt mindestens 3 Gew.-%, am meisten bevorzugt mindestens 5 Gew.-% Zinkoxid. Das erfindungsgemäße Glas enthält höchstens 20 Gew.-%, bevorzugt höchstens 11 Gew.-%, besonders bevorzugt höchstens 10 Gew.-%, am meisten bevorzugt höchstens 9 Gew.-% Zinkoxid. ZnO trägt zum gewünschten Viskositäts-Temperatur-Verhalten ("kurzes" Glas) im Viskositätsbereich von 10^{7,6} bis 10¹³ dPas bei.

Das erfindungsgemäßen Glas kann gegebenenfalls die Erdalkalioxide SrO, MgO und/oder CaO enthalten, wobei jede einzelne dieser Komponenten unabhängig von einander in einem Anteil von höchstens 5 Gew.-%, vorzugsweise höchstens 3 Gew.-%, am meisten bevorzugt höchstens 2 Gew.-% enthalten ist.

Das erfindungsgemäße Glas kann ferner weitere Komponenten, wie TiO₂ und/oder ZrO₂ in einem Anteil von vorzugsweise weniger als 1 Gew.-% enthalten.

Die erfindungsgemäßen Gläser können zudem gegebenenfalls B₂O₃ in einem Anteil von weniger als 5 Gew.-%, vorzugsweise höchstens 4 Gew.-%, enthalten. Die stark netzwerkbildenden Eigenschaften von B₂O₃ erhöhen die Stabilität der Gläser gegen Kristallisation und die chemische Beständigkeit. Der Anteil sollte jedoch nicht 5 Gew.-% oder mehr betragen, da sonst das Glasnetzwerk übermäßig gefestigt wird und sich der Tg und der Schmelzpunkt des Glases in unerwünschter Weise erhöhen. Auch werden die Gläser dann "länger", was ebenfalls gemäß der vorliegenden Erfindung nicht bevorzugt ist. Ferner können während des Schmelz- und Aufschmelzvorgangs Teile des zugesetzten B₂O₃s verdampfen, wodurch eine genaue Einstellung der Zusammensetzung erschwert ist. Bevorzugte Ausführungsformen des erfindungsgemäßen Glases sind daher frei von B₂O₃.

Ferner ist das Glas vorzugsweise frei von SnO₂, sowie der netzwerkbildenden und damit die Transformationstemperatur erhöhenden Komponente SiO₂.

Das erfindungsgemäße Glas ist als optisches Glas vorzugsweise auch frei von färbenden, und/oder optisch aktiven wie laseraktiven Komponenten.

Insbesondere ist das erfindungsgemäße Glas vorzugsweise auch frei von Komponenten, welche redoxempfindlich sind, wie beispielsweise Ag, und/oder frei von toxischen bzw. gesundheitsschädlichen Komponenten, wie beispielsweise TI, Be und As.

Gemäß einer Ausführungsform der vorliegenden Erfindung ist das erfindungsgemäße Glas auch vorzugsweise frei von anderen, in den Ansprüchen nicht genannten Komponenten, d.h. gemäß einer derartigen Ausführungsform besteht das Glas im wesentlichen aus den genannten Komponenten. Der Ausdruck "im wesentlichen bestehen aus" bedeutet dabei, dass andere Komponenten höchstens als Verunreinigungen vorliegen, jedoch der Glaszusammensetzung nicht als einzelne Komponente beabsichtigt zugegeben werden.

Das erfindungsgemäße Glas kann übliche Läutermittel in geringen Mengen beinhalten. Vorzugsweise beträgt die Summe der zugesetzten Läutermittel höchstens 2,0 Gew.-%, mehr bevorzugt höchstens 1,0 Gew.-%, wobei diese Mengen additiv zu den 100 Gew.-% ergebenden Komponenten der übrigen Glaszusammensetzung hinzukommen. Als Läutermittel kann in dem erfindungsgemäßen Glas mindestens eine der folgenden Komponenten enthalten sein (in Gew.-%, additiv zur übrigen Glaszusammensetzung):

| | |
|---|---|
| Sb₂O₃ | 0 - 1 und / oder |
| SnO | 0 - 1 und / oder |
| SO₄²⁻ | 0 - 1 und / oder |
| F⁻ | 0 - 1 |

Auch Fluor und fluorhaltige Verbindungen neigen während des Schmelz- und Aufschmelzvorgangs zum Verdampfen und erschweren dadurch ein genaues Einstellen der Glaszusammensetzung. Das erfindungsgemäße Glas ist daher vorzugsweise auch fluorfrei.

Die erfindungsgemäßen Gläser können, falls durch die Anwendung erwünscht, mittels einem herkömmlichen Na/Ag- und/oder K/Ag-lonenaustausch vorgespannt oder brechzahlprofiliert werden.

Erfindungsgemäß wird das Phosphat vorzugsweise als komplexes Phosphat dem Gemenge zugegeben. Auch aus diesem Grund ist ein Gehalt von maximal 60 Gew.-% Phosphat vorteilhaft, da bei einem höheren Gehalt der Anteil "komplexer Phosphate" zugunsten des "freien" P₂O₅ zurückgeht, was zu einer Unbeherrschbarkeit im Schmelzverhalten und deutlich erhöhten Verdampfungs- und Verstaubungseffekten, einhergehend mit einer verschlechterten inneren Qualität, führen kann. Zusätzlich stellt ein erhöhter Anteil an freiem, d.h. nicht komplexen Phosphat erhöhte Anforderungen an die Sicherheitstechnik des Produktionsbetriebes, wodurch sich die Herstellungskosten erhöhen. Der Ausdruck "komplexes Phoshat" bedeutet erfindungsgemäß, dass dem Gemenge kein Phosphat in Form von P₂O₅ zugegeben wird, sondern Komponenten wie MO und M₂O nicht beispielsweise in oxidischer oder carbonatischer Form, sondern als Phosphat wie beispielsweise in Form von Bariumhydrogenphosphat und/ oder -methaphosphat und Alkalimetaphosphat dem Gemenge zugegeben werden. Dadurch verbessert sich Herstellbarkeit des Glases erheblich: Verstaubungsneigung des Gemenges kann drastisch gesenkt werden, weil komplexe Phosphate im Gegenteil zu freiem Phosphat befeuchtet werden können. Ferner nimmt die Verdampfungsneigung der Glasschmelze ab. So werden deutlich verbesserte Homogenitäten der Glasschmelze erreicht, die sich besonders in der Qualität und Homogenität der optischen Daten des entstehenden Glases widerspiegeln. Aber auch generell wird ein aufgrund seiner Kürze ansonsten recht schlierenanfälliges hochphosphathaltiges Glas mit einer verbesserten inneren Qualität hinsichtlich beispielsweise Blasen und/oder Schlieren erhalten.

Die vorliegende Erfindung betrifft ferner die Verwendung der erfindungsgemäßen Gläser für die Applikationsbereiche Abbildung, Projektion, Telekommunikation, optische Nachrichtentechnik und/oder Lasertechnologie.

Die vorliegende Erfindung betrifft ferner optische Elemente, welche das erfindungsgemäße Glas umfassen. Optische Elemente können dabei insbesondere Linsen, Asphären, Prismen und Kompaktbauteile sein. Der Begriff "optisches Element" umfasst dabei erfindungsgemäß auch Vorformen bzw. Preformen eines solchen optischen Elements, wie beispielsweise Gobs, Precision Gobs und ähnliches.

Die vorliegende Erfindung wird im folgenden durch eine Reihe von Beispielen näher erläutert. Die vorliegende Erfindung ist aber nicht auf die genannten Beispiele beschränkt.

### Beispiele

Die Tabellen 2 und 3 enthalten Ausführungsbeispiele im bevorzugten Zusammensetzungsbereich sowie ein Vergleichsbeispiel. Die in den Beispielen beschriebenen Gläser wurden folgendermaßen hergestellt:

Die Rohstoffe für die Oxide, bevorzugt die entsprechenden Carbonate, der Phosphatanteil bevorzugt als komplexe Phosphate, werden abgewogen, ein oder mehrere Läutermittel, wie z. B. Sb₂O₃, zugegeben und anschließend gut gemischt. Das Glasgemenge wird bei ca. 1150°C in einem kontinuierlichen Schmelzaggregat eingeschmolzen, danach geläutert (1200°C) und homogenisiert. Bei einer Gusstemperatur von etwa 950°C kann das Glas gegossen und zu den gewünschten Abmessungen verarbeitet werden. Im großvolumigen, kontinuierlichen Aggregat können die Temperaturen erfahrungsgemäß um mindestens ca. 100 K abgesenkt werden, und das Material kann im endgeometrienahen Pressverfahren verarbeitet werden.

**Tabelle 1:**

| Schmelzbeispiel für 100 kg berechnetes Glas (gemäß Beispiel 3) | | | |
|---|---|---|---|
| **Oxid** | **Gew.-%** | **Rohstoff** | **Einwaage (g)** |
| P₂O₅ | 50,74 | NaPO₃, KPO₃ | siehe Na₂O, |
| | | Ba(H₂PO₄)₂ | K₂O, BaO |
| Al₂O₃ | 11,95 | Al(OH)₃ | 549,14 |
| Na₂O | 12,22 | NaPO₃ | 1208,63 |
| K₂O | 12,70 | K₂CO₃ | 792,53 |
| BaO | 6,59 | Ba(H₂PO₄)₂ | 439,38 |
| ZnO | 5,5 | ZnO | 164,28 |
| ZrO₂ | 0,11 | ZrO₂ | 3,29 |
| Sb₂O₃ | 0,3 | Sb₂O₃ | 5,68 |
| Summe | 100 | | 3244,35 |

Die Eigenschaften des so erhaltenen Glases sind in der Tabelle 2 als Beispiel 3 angegeben.

Tabellen 2 und 3 enthalten die erfindungsgemäßen Beispiele 1 bis 8 und Vergleichsbeispiel 1.

Alle erfindungsgemäßen Gläser weisen einen Tg von weniger als oder gleich 400°C auf, sind kristallisationsstabil und lassen sich gut verarbeiten.

Vergleichsbeispiel 1 ist eine Zusammensetzung, bei denen kein Glas erhalten wurde, sondern bei Erkalten der Zusammensetzung eine Kristallisation erfolgte. Eine Bestimmung der optischen Daten war daher nicht möglich.

**Tabelle 2:**

| **Beispiele 1 bis 5 (Angaben in Gew.-% auf Oxidbasis)** | | | | | |
|---|---|---|---|---|---|
| | Beispiel 1 | Beispiel 2 | Beispiel 3 | Beispiel 4 | Beispiel 5 |
| P₂O₅ | 46,08 | 51,58 | 50,74 | 50,87 | 58,00 |
| Al₂O₃ | 9,09 | 12,31 | 11,95 | 7,83 | 10,50 |
| Σ P₂O₅ ,Al₂O₃ | 55,17 | 63,89 | 62,69 | 58,70 | 68,50 |
| Na₂O | 13,56 | 11,26 | 12,22 | 5,87 | 12,00 |
| K₂O | 14,08 | 12,59 | 12,70 | 19,57 | 11,00 |
| Σ M₂O | 27,64 | 23,85 | 24,92 | 25,44 | 23,00 |
| MgO | - | - | - | 0,98 | - |
| CaO | - | - | - | - | - |
| SrO | - | - | - | - | 1,00 |
| BaO | 9,00 | 6,53 | 6,59 | 5,87 | 4,00 |
| ZnO | 7,62 | 5,44 | 5,500 | 8,81 | 3,00 |
| Σ MO | 16,62 | 11,97 | 12,09 | 15,66 | 8,00 |
| TiO₂ | - | - | - | - | 0,30 |
| ZrO₂ | 0,37 | 0,11 | 0,11 | - | - |
| B₂O₃ | - | - | - | - | - |
| Sb₂O₃ | 0,20 | 0,18 | 0,19 | 0,20 | 0,20 |
| Summe | 100 | 100 | 100 | 100 | 100 |
| n_{d} | 1,52111 | 1,52639 | 1,52432 | 1,52525 | 1,52622 |
| ν_{d} | 62,88 | 65,82 | 65,36 | 65,54 | 65,56 |
| P_{g,F} | 0,5451 | 0,5410 | 0,5416 | 0,5426 | 0,5424 |
| ΔP_{g,F} (10⁻⁴) | 0,0070 | 0,0079 | 0,0078 | 0,0090 | 0,0088 |
| τi(400nm), d=25mm | | 0,963 | 0,984 | 0,967 | 0,718 |
| τi(420nm) d=25mm | | 0,969 | 0,987 | 0,960 | 0,726 |
| α₂₀₋₂₅₀ (10⁻⁶ * K⁻¹) | 18,55 | - | - | - | - |
| α₂₀₋₃₀₀ (10⁻⁶ * K⁻¹) | - | 16,0 | 16,6 | 16,7 | 15,6 |
| Tg (°C) | 311 | 375 | 372 | 374 | 395 |
| ρ (g/cm³) | 2,85 | 2,82 | 2,82 | 2,83 | 2,78 |
| ΔT [T(η=10^{7,6})- | 63 | 53 | 55 | - | - |
| T(η=10¹³ dPas)] (K) | | | | | |

**Tabelle 3:**

| **Beispiele 5 bis 8 und Vergleichsbeispiele (Angaben in Gew.-% auf Oxidbasis)** | | | | |
|---|---|---|---|---|
| | Beispiel 6 | Beispiel 7 | Beispiel 8 | Vgl.-Bsp. 1 |
| P₂O₅ | 52,85 | 58,73 | 46,26 | 38,86 |
| Al₂O₃ | 11,77 | 5,00 | 11,95 | 13,44 |
| Σ P₂O₅ ,Al₂O₃ | 64,62 | 63,73 | 58,21 | 52,30 |
| Na₂O | 10,77 | 8,00 | 12,22 | 15,36 |
| K₂O | 12,03 | 8,00 | 12,7 | 15,36 |
| Σ M₂O | 22,80 | 16,0 | 24,92 | 30,72 |
| MgO | - | - | - | - |
| CaO | 1,46 | - | - | 1,90 |
| SrO | - | - | - | - |
| BaO | 5,74 | 11,00 | 6,59 | 9,60 |
| ZnO | 5,20 | 9,00 | 5,50 | 5,28 |
| Σ MO | 10,94 | 20,00 | 12,09 | 16,80 |
| TiO₂ | - | - | | - |
| ZrO₂ | - | 0,10 | 0,11 | - |
| B₂O₃ | - | - | 4,48 | - |
| Sb₂O₃ | 0,18 | 0,17 | 0,19 | 0,20 |
| Summe | 100 | 100 | 100 | 100 |
| n_{d} | 1,53003 | 1,53423 | 1,52021 | |
| ν_{d} | 66,03 | 65,58 | 65,26 | |
| P_{g,F} | 0,5414 | 0,5409 | 0,5411 | |
| ΔP_{g,F} (10⁻⁴) | 0,0087 | 0,0074 | 0,0071 | |
| τi(400nm), d=25mm | 0,953 | 0,894 | 94,6 | |
| τi(420nm) d=25mm | 0,961 | 0,899 | 96,1 | |
| α₂₀₋₂₅₀ (10^{-6 *} K⁻¹) | - | - | - | |
| α₂₀₋₃₀₀ (10⁻⁶ * K⁻¹) | 15,8 | 15,6 | 16,4 | |
| Tg (°C) | 400 | 352 | 378 | |
| ρ (g/cm³) | 2,87 | 2,91 | 2,78 | |
| ΔT [T(η=10^{7,6})- | - | - | - | |
| T(η=10¹³dPas)] (K) | | | | |

## Patentansprüche

1. Bleifreies optisches Glas mit einem Brechwert n_{d} von 1,50 ≤ n_{d} ≤ 1,57 und einer Abbé-Zahl ν_{d} von 61 ≤ ν_{d} ≤ 70, **dadurch gekennzeichnet, dass** das Glas die folgende Zusammensetzung umfasst (in Gew.-% auf Oxidbasis):
| | |
|---|---|
| P₂O₅ | 40 - 60 |
| Al₂O₃ | 1 - 20 |
| B₂O₃ | 0 - < 5 |
| Na₂O | 0 - 30 |
| K₂O | 0 - 30 |
| Li₂O | 0 - < 1 |
| Σ M₂O | > 15 - 40 |
| BaO | 1 - 20 |
| ZnO | 1 - 20 |
| SrO | 0 - 5 |
| CaO | 0 - 5 |
| MgO | 0 - 5 |
| Σ MO | 5 - 25 |

2. Glas nach Anspruch 1 welches die folgende Zusammensetzung umfasst (in Gew.-% auf Oxidbasis):
| | |
|---|---|
| P₂O₅ | 43 - 59 |
| Al₂O₃ | 4 - 15 |
| Na₂O | 1 - 25 |
| K₂O | 1 - 25 |
| Σ M₂O | 16 - 35 |
| BaO | 4 - 15 |
| ZnO | 2 - 14 |
| SrO | 0 - 3 |
| CaO | 0 - 3 |
| MgO | 0 - 3 |
| Σ MO | 10 - 25 |

3. Glas nach Anspruch 1 oder 2, welches die folgende Zusammensetzung umfasst (in Gew.-% auf Oxidbasis):
| | |
|---|---|
| P₂O₅ | 45 - 55 |
| Al₂O₃ | 5 - 14 |
| Na₂O | 3 - 20 |
| K₂O | 3 - 20 |
| Σ M₂O | 16 - 30 |
| BaO | 5 - 11 |
| ZnO | 5 - 11 |
| SrO | 0 - 3 |
| CaO | 0 - 4 |
| MgO | 0 - 2 |
| Σ MO | 0 - 22 |

4. Glas nach einem der Ansprüche 1 bis 3, welches die folgende Zusammensetzung umfasst (in Gew.-% auf Oxidbasis):
| | |
|---|---|
| P₂O₅ | 45 - 52 |
| Al₂O₃ | 5 14 |
| Na₂O | 5 - 15 |
| K₂O | 5 - 15 |
| Σ M₂O | 20 - 28 |
| BaO | 5 - 10 |
| ZnO | 5 - 10 |
| SrO | 0 - 2 |
| CaO | 0 - 2 |
| MgO | 0 - 2 |
| Σ MO | 10 - 21 |

5. Glas nach einem der Ansprüche 1 bis 4, welches es als Läutermittel mindestens eine der folgenden Komponenten enthält (in Gew.-%):
| | |
|---|---|
| Sb₂O₃ | 0 - 1 und / oder |
| SnO | 0 - 1 und / oder |
| SO₄²⁻ | 0 - 1 |

6. Glas nach einem der Ansprüche 1 bis 5, welches lithiumfrei und/oder borfrei ist.

7. Verwendung eines Glases nach einem der Ansprüche 1 bis 6 für die Bereiche Abbildung, Projektion, Telekommunikation, optische Nachrichtentechnik und/oder Lasertechnologie.

8. Verwendung eines Glases nach einem der Ansprüche 1 bis 6 für optische Elemente.

9. Optisches Element, umfassend ein Glas nach einem der Ansprüche 1 bis 6.

10. Verfahren zur Herstellung eines optischen Elements, umfassend den Schritt:
- Blankpressen eines Glases nach einem der Ansprüche 1 bis 6.
